# EUROPEAN PATENT APPLICATION

(11) **EP 4 703 966 A1**
(43) Date of publication of application: **04.03.2026**
(21) Application number: 24197514.3
(22) Date of filing: 30.08.2024
(51) Int. Cl.: G06N 3/044, G06Q 10/0631, G06Q 10/1093, G10L 15/00

(54) **A METHOD FOR PROVIDING A PROJECT INFORMATION ACCESS SYSTEM BY AN ELECTRONIC COMPUTING DEVICE, A COMPUTER PROGRAM PRODUCT, A NON-TRANSITORY COMPUTER-READABLE STORAGE MEDIUM, AS WELL AS AN ELECTRONIC COMPUTING DEVICE**

(71) Applicant: Siemens Aktiengesellschaft, 80333 München (DE)
(72) Inventor: The designation of the inventor has not yet been filed
(74) Representative: Siemens Patent Attorneys

(57) **Abstract**

The invention relates to a method for providing a project information access system (14) by an electronic computing device (10). The method comprises the steps of: providing at least one project information datum (18) by the electronic computing device (10), where each of the at least one project information datum (18) is associated with at least one worker contact detail (20); providing a communication platform (26) by the electronic computing device (10) for two-way communication with a user (28) of the project information access system (14); receiving a project information request (34) from the user (28) by the electronic computing device (10) via the communication platform (26); matching the project information request (34) by the electronic computing device (10) to at least one matching datum (38) of the at least one project information datum (18); and providing the at least one matching datum (38) and/or at least one matching worker contact detail (40) corresponding to the at least one matching datum (38) to the user (28) via the communication platform (26) by the electronic computing device (10), depending on the project information request (34).

## Description

The present invention relates to a method for providing a project information access system by an electronic computing device according to the pending claim one. Furthermore, the present invention relates to a corresponding computer program product, a corresponding non-transitory computer-readable storage medium, as well as to a corresponding electronic computing device.

Communication and information retrieval may be of critical importance to operational efficiency within an organization. For example, if a first member of the organization is tasked with a project but lacks technical experience in a particular area of the project, completion of the project may be sped up by the first member establishing communication with a second member of the organization who has technical experience in the particular area. As another example, completion of the project may be sped up if the first member becomes aware of a computer program, written by the second member, that happens to be applicable to an aim of the project. If the computer program exists, but the first member is unaware of it, the first member may unnecessarily dedicate working time toward production of a functionally duplicate computer program.

Within large companies, for example companies with more than 500 employees, internal communication and information retrieval may be complicated. For example, a company may have offices in multiple cities, which may limit an ability of a first individual employee to encounter a second individual employee working on a similar task. Although a company may be separated into multiple departments focusing on different projects, a first individual employee in a first department of the company may be solving a first problem similar to a second problem being solved by a second individual employee of a second department of the company.

One solution known to the state of the art to be used to improve intra-organizational information retrieval is a so called wiki. A wiki is a digital collection of informational resources, such as articles of an encyclopedic format, that is designed for collaborative maintenance and is known to the state of the art to be hosted on public as well as private servers. Departmental websites may also be put to similar use, for example if they host profile pages describing projects and expertise areas of individual employees, or for example if they host documents such as departmental memos, corporate methodologies, progress reports, version control logs, code templates, and meeting minutes. It is known to the state of the art that search bars may be implemented in both wikis and departmental websites. Search bars may facilitate information retrieval by allowing a user to enter a keyword pertaining to desired information.

One limitation of wikis and departmental websites may be a time expense associated with content maintenance such as continuous updates to wiki articles concerning workplace developments. Another limitation may be insufficient granularity associated with employee profile pages. For instance, a first employee profile may describe an employee as having five years of experience in UI development as well as proficiencies in the programming languages Java and C#. At a company of, say, 10,000 employees, this first employee profile may be difficult to distinguish from at least one second employee profile. Another limitation concerns convenience of retrieval of information. A search bar may not be able to match entered keywords against contents internal to a file, for example a PDF file consisting of scanned text. Furthermore, results yielded by an entering of a search prompt in a search bar may depend sensitively on a wording of the search prompt. Consequently, an employee seeking information may fail to find desired information even when it is present on the wiki and/or departmental website.

One limitation not intrinsic to these solutions but which may manifest when they are applied within a company comprising more than one department is inconsistency. Specifically, for instance, each department of the company may maintain its own departmental website according to a different visual layout and/or a different jargon. Differences in layout and/or jargon across departmental websites within the company may result in confusion, discouraging inter-departmental communication.

According to the state of the art as exemplified in document WO 2019 166 878 A1, another known solution involves configuring a system to map expert resources within an organization or group of users and to identify expert resources to route questions based on the mapped expert resources. The system may be configured to cause a question received from a first user to be provided to a second user. Furthermore, it is known from the same document that a computer system of the system may be programmed to receive feedback related to a response by the second user.

One limitation of this solution may be reliance on user-provided skill descriptors. These skill descriptors require manual maintenance and therefore reduce potential for automation. A requirement of manual maintenance may encourage a second user to describe his work and/or skill set with a specificity too low to distinguish himself from at least one other user. Another limitation of the solution may be that a question posed by the first user may be routed to a second user even if at least one informational resource available to the first user, for example on a wiki, directly addresses the question.

Therefore, there is a need in the art to provide a project information access system that may automatically match various possible formulations of an information request to at least one relevant informational resource such as a contact detail.

Therefore, it is an object of the present invention to provide a method, a corresponding computer program product, a corresponding non-transitory computer-readable storage medium, as well as a corresponding electronic computing device, by which information retrieval may be improved.

This object is solved by a method, a corresponding computer program product, a corresponding computer-readable storage medium, as well as a corresponding electronic computing device according to the independent claims. Advantageous embodiments are presented in the dependent claims.

One aspect of the invention relates to a method for providing a project information access system by an electronic computing device. At least one project information datum is provided by the electronic computing device, where each of the at least one project information datum is associated with at least one worker contact detail. A communication platform is provided by the electronic computing device for two-way communication with a user of the access system. A project information request from the user is received by the electronic computing device via the communication platform. The project information request is matched by the electronic computing device to at least one matching datum of the at least one project information datum. The at least one matching datum and/or at least one matching worker contact detail corresponding to the at least one matching datum is provided to the user via the communication platform by the electronic computing device, depending on the project information request.

A "project" may involve, for instance, a writing of a computer program, a drafting of a human-language document such as a funding proposal, a designing of a hardware component such as an integrated circuit, an arranging of a visual user interface, or a conducting of a business negotiation.

The electronic computing device may comprise electronic means, for example, processors; circuits and especially integrated circuits; and further electronic means for performing the method. The electronic computing device may in particular be understood as a data processing device, which comprises processing circuitry. The electronic computing device may therefore process data to perform computing operations. This may also include operations to perform indexed accesses to a data structure, for example a look-up table, LUT.

In particular, the electronic computing device may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The electronic computing device may also include one or more processors, for example one or more microprocessors, one or more central processing units, CPU, one or more graphics processing units, GPU, and/or one or more signal processors, in particular one or more digital signal processors, DSP. The electronic computing device may also include a physical or a virtual cluster of computers or of other said units.

An electronic computing device may also comprise one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

The electronic computing device may in particular use a technique of natural language processing, NLP. NLP may use a variety of technical methods for providing service to the user in a human language such as English: Tokenization: This is the process of breaking down text into individual words or tokens. Tokenization is a fundamental step in NLP, as it allows us to analyze and manipulate text at the word level; Part-of-Speech Tagging: This is the process of labeling each word in a sentence with its corresponding part of speech (e.g., noun, verb, adjective, etc.). Part-of-speech tagging helps us understand the syntactic structure of a sentence and is often used as an intermediate step in more complex NLP tasks; Parsing: This is the process of analyzing the grammatical structure of a sentence to identify its subject, verb, object, and other grammatical relationships. Parsing is used to extract meaning from text and is often used in applications such as machine translation and sentiment analysis; Named Entity Recognition (NER): This is the process of identifying and categorizing named entities (e.g., people, organizations, locations) in text. NER is used in a variety of applications, including information extraction, question answering, and search. Sentiment Analysis: This is the process of analyzing text to determine its overall sentiment or emotion. Sentiment analysis is used in applications such as social media monitoring, customer feedback analysis, and brand reputation management. Machine Translation: This is the process of automatically translating text from one language to another. Machine translation uses techniques such as statistical machine learning and neural machine translation to generate translations that are increasingly accurate and idiomatic. Text Classification: This is the process of categorizing text into predefined categories based on its content. Text classification is used in applications such as spam filtering, topic modeling, and sentiment analysis. Information Extraction: This is the process of extracting structured information from unstructured text. Information extraction involves techniques such as named entity recognition, part-of-speech tagging, and parsing to identify and extract relevant information from text. Chatbots and Virtual Assistants: These are Al systems that use NLP to interact with users in natural language. Chatbots and virtual assistants are used in applications such as customer service, information retrieval, and personal assistance. Transfer Learning: This is a technique in NLP where pre-trained models are fine-tuned on specific tasks or domains. Transfer learning has been shown to be highly effective in NLP, allowing models to leverage large amounts of pre-existing knowledge and adapt to new tasks with minimal data.

In order to provide robust NLP, training of a model is required. Training data is the input that is used to train NLP models. It typically consists of large amounts of text data, along with labels or annotations that indicate the desired output for each input. The quality and quantity of training data are critical factors in determining the performance of NLP models. There are several types of training data commonly used in NLP: Annotated Data: This is training data that has been manually labeled or annotated by human experts. For example, a dataset of product reviews might be annotated with sentiment labels (positive, negative, neutral) to train a sentiment analysis model; Synthetic Data: This is training data that is generated artificially, often using algorithms or templates. Synthetic data can be useful for tasks where annotated data is scarce or expensive to obtain. For example, a synthetic dataset of dialogues might be generated to train a chatbot model; Unsupervised Data: This is training data that does not have any associated labels or annotations. Unsupervised data can be used to train models for tasks such as clustering, topic modeling, and word embedding; Pre-trained Models: These are NLP models that have been pre-trained on large amounts of text data, often using unsupervised learning techniques. Pre-trained models can be fine-tuned on specific tasks or domains using transfer learning; Data Augmentation: This is a technique used to artificially increase the size and diversity of training data by applying transformations such as synonym replacement, insertion, deletion, and substitution. Data augmentation can help improve the robustness and generalization of NLP models; Data Balancing: This is a technique used to address class imbalance in annotated datasets. Class imbalance occurs when one class has significantly more examples than another class, leading to bias in the model. Data balancing techniques include oversampling, undersampling, and SMOTE (Synthetic Minority Over-sampling Technique); Data Cleaning: This is a preprocessing step used to remove noise and inconsistencies from training data. Data cleaning involves techniques such as spelling correction, punctuation normalization, and stopword removal; Data Splitting: This is the process of dividing the training data into separate sets for training, validation, and testing. The training set is used to train the model, the validation set is used to tune hyperparameters and prevent overfitting, and the test set is used to evaluate the final performance of the model.

In the method, that is, in this aspect of the invention, a project information datum may be a file, for example a spreadsheet, word processor document, audio or video recording, or source code file. A project information datum may also be an excerpt from such a file, for instance a quote or a keyword. The project information datum may be provided alongside an auxiliary reference datum. For example, if the project information datum is an excerpt of a file, a corresponding auxiliary reference datum may be a line number or a timestamp within the file at which the excerpt may be found. As another example, if the project information datum is a video or audio recording, a corresponding auxiliary reference datum may be an automatically generated transcript of the recording.

Providing of the at least one project information datum may involve, for example, retrieval of a set of weights and biases associated with neurons of a neural network trained over a set of project information data. Providing may also involve, for example, establishing a connection with at least one archive of web crawling results, such as from at least one web crawl of a departmental website. Furthermore, for example, the at least one web crawl may be performed by the electronic computing device, extracting project information data and worker contact details from at least one uploaded file for use in this aspect of the invention. Additionally, providing may entail an establishing of a connection with at least one database such as a file server or a data warehouse. Establishing the connection may involve application of at least one security token, for example if the at least one database is internal to a company.

The electronic computing device may make use of metadata associated with provided project information data. For example, the electronic computing device may automatically discard a project information datum whose age, as determined from a timestamp associated with a most recent modification, exceeds a pre-defined age threshold. As another example, the electronic computing device may resolve a project information data conflict, such as competing documentation concerning a single function of a computer program, by preferring a project information datum identified as more recently modified than a competing project information datum. Other examples of project information datum metadata include file size in number of pages, file size in number of bytes, file type, and file permissions.

Furthermore, although an advantage of the invention is a potentially reduced need for manual documentation such as wiki articles, the project information access system may nevertheless be used alongside at least one company wiki and in fact make use of at least one of the at least one company wiki in order to serve users. Furthermore, for example, the project information access system may make use of lower-maintenance yet still manually-created information labels such as tags associated with files as they are, for example, uploaded to a company server. A tag is a discrete unit of human-readable information that may be associated with a file in order to provide a succinct description of the file. For example, tags for a document containing meeting minutes may include "budget," "new hires," "documentation practices," and "server maintenance."

A "worker" is an agent contributing to at least one project but is not necessarily subject to compensation or a formal work contract. Examples of workers include an employee of a company, a consultant of a company, a volunteer contributor such as to an open source computer program, a student attending to a school assignment, and an independent individual undertaking a project as a hobby.

A worker contact detail may be, for example, an email address, a telephone number, an office number, an office location, or a profile identifier, wherein a profile identified by the profile identifier is associated with a communication platform such as a video conferencing platform.

The at least one project information datum may be associated with the at least one worker contact detail by, for example, searching at least one name in a worker contact directory available to the electronic computing device. For instance, if the at least one project information datum is a quote extracted from a document, the quote may be paired with at least one name extracted from the document. The at least one name may then be searched, for example on a company roster, to obtain the at least one worker contact detail.

A communication platform for two-way communication may be, for example, a website whereupon the user may type out the project information request. The communication platform may also be, for example, an offline application designed for use on devices such as personal computers, smart phones, or tablets.

The communication platform may be provided as a chatbot. That is, the electronic computing device may simulate a conversation with the user. For example, if the at least one matching datum provided to the user does not relate to the project information request as intended by the user, the user may clarify the project information request with additional information such that the electronic computing device takes into account both the project information request as originally posed as well as the additional information.

The communication platform may feature a submission mechanism such as a clickable button by which the project information request may be submitted to the electronic computing device. The communication platform may feature various interface components intended, for example, to increase user convenience and/or utility. For instance, the communication platform may include a searchable record of previously submitted project information requests. As another example, the communication platform may feature a tooltip when the user positions a cursor over a jargon term appearing in an output of the electronic computing device. The tooltip may clarify a meaning of the jargon term. Content of the tooltip may have been, for example, automatically generated by the electronic computing device based on at least one project information datum. As another example of an interface component, the communication platform may feature an input mechanism by which the user may specify a language or color scheme of the interface.

A project information request may be, for example, a request for information related to a particular worker. In response to this request, the electronic computing device may provide, for instance, project information concerning at least one project in which the particular worker has been involved. Furthermore, a project information request may be, for instance, a request for information related to a particular project. In response to this request, the electronic computing device may provide, for instance, a list of objectives and/or outcomes of the particular project. Furthermore, a project information request may be, for example, a request for information on a project-related problem such as a computer bug faced by the user. In this way, the user may discover if another worker has already faced a similar problem. In response to this request, the electronic computing device may provide, for instance, at least one reference to at least one project describing the same project-related problem.

A project information request may make use of at least one filter. A filter is an element of the project information request that may concern metadata of possible project information matches. For example, the user may specify a filter of a particular timeframe within which the at least one matching datum must have been published. Other examples of filters include physical locations and company departments from which the at least one matching datum must have originated.

A matching project information datum is any project information datum that the electronic computing device determines is relevant to the project information request. The step of matching the project information request to the at least one matching datum may involve, for example, an identification of at least one keyword from the project information request as present within at least one project information datum. Furthermore, the step may involve automatic reformulation of the project information request in order to extract at least one additional keyword. For example, the project information request may be automatically reworded using at least one synonym, wherein the at least one synonym may be identifiable as present within at least one project information datum.

The step of matching the project information request to the at least one matching datum may involve indirect matching if no direct matches are found. For example, if none of the keywords of the project information request matches to any project information data available to the electronic computing device, and no synonym substitution is successful in obtaining a match either, an artificial intelligence of the electronic computing device may identify, based on the project information request as well as project information data over which the artificial intelligence is trained, a worker who is most likely to have information relevant to the project information request. Alternatively or in addition, the electronic computing device may match, for example, the project information request to a department within whose purview the project information request is expected to reside. In this case, the electronic computing device may provide the user with a worker contact detail associated with a head of the department.

If, for example, the at least one matching worker contact detail is provided by the electronic computing device to the user, the electronic computing device may simultaneously provide availability information such as at least one "last online timestamp" associated with the at least one matching worker contact detail, where in the last online timestamp relates a timestamp at which the worker last made use of a communication channel corresponding to the worker contact detail. For instance, the worker contact detail is a profile identifier connected to a video conferencing platform, the last online timestamp may relate a most recent time at which the worker used the videoconferencing platform.

A total number of matching data may be provided by the electronic computing device to the user alongside the matching data. The total number may assist the user in identifying his project information request as too broadly posed. For example, if the total number of matching data exceeds 20, the user may be encouraged to apply an additional filter.

The preceding aspect relates a project information access system that may automatically match various possible formulations of an information request to at least one relevant informational resource such as a contact detail. Therefore, as a consequence of application of the preceding aspect, the invention may improve information retrieval while simultaneously addressing the limitations attributed earlier to alternate solutions.

According to an embodiment, the method comprises the additional step of generating a control signal for at least one telecommunication device associated with the user to establish at least one telecommunication connection with a telecommunication device associated with at least one of the at least one matching worker contact detail, depending on a received user input.

A telecommunication device may rely on at least one radio transmitter and at least one radio receiver, such as a Wi-Fi-enabled network interface controller known from the state of the art to be installed in devices such as personal computers, smartphones, and tablets. A telecommunication device may alternatively or in addition rely on a wired connection. For example, a landline telephone within an office building may make exclusive use of wires for transmitting call audio between parties if both parties are located within the same office building.

Examples of telecommunication connections include one-way transmissions such as chat messages as well as two-way transmissions such as audio and video calls as supported by internet-based communication platforms such as videoconferencing platforms. Another example of a telecommunication connection is a transmission of an email. Another example of a connection between telecommunication devices is a phone call between two landline telephones. Specifically, for example, the electronic computing device may automatically dial a telephone number of the at least one matching worker contact detail.

In this embodiment, the generation of the control signal depends on a received user input. For example, the electronic computing device may provide in the communication platform a button that may be clicked to transmit the received user input to the electronic computing device. As another example, if the communication platform features a chatbot, the chatbot may ask the user whether he would like the chatbot to transmit the received user input to the electronic computing device. In this example, the received user input may be an affirmative English-language reply to the chatbot.

The received user input may be present by default, for example if the user adjusts a setting in the communication platform to activate automatic contacting. Alternatively or in addition, a default value of the setting may correspond to automatic contacting. In automatic contacting, the electronic computing device may generate a control signal for a telecommunication connection to automatically be initiated. For example, the electronic computing device may generate a dialing control signal for a telephone associated with the user, wherein at least one telephone number associated with at least one of the at least one matching worker contact detail is input into the telephone and wherein the number is called. As another example, the electronic computing device may automatically open an email client. In addition, the electronic computing device may, for example, open an interface associated with a new email draft and/or automatically save a new email draft to a list of email drafts associated with the user. In addition, the electronic computing device may, for example, automatically save an email address associated with at least one of the at least one matching worker contact detail to the automatically generated draft. In addition, the electronic computing device may, for example, automatically fill in a subject line and/or email body of the email draft with a placeholder text and/or a an e-mail template.

According to another embodiment, at least the at least one matching datum and/or at least the at least one matching worker contact detail is transmitted by the electronic computing device to an audio output device. For example, at least the at least one matching datum and/or at least the at least one matching worker contact detail may be processed by a text-to-speech algorithm in order to generate at least one corresponding audio datum that is then passed to, for example, a speaker within audible range of the user.

This embodiment may result in increased convenience and/or accessibility of the project information access system. For example, this embodiment may allow the user to become informed of at least the at least one matching datum and/or at least the at least one matching worker contact detail without actively looking at an interface of the communication platform.

Additionally, a visually impaired user may more easily become informed of at least the at least one matching datum and/or at least the at least one matching worker contact detail.

According to another embodiment, at least the project information request is captured as an audio input from the user by an audio input device and transmitted to the electronic computing device. For example, at least the project information request may be spoken by the user into a digital microphone. The digital microphone may then generate at least one corresponding audio datum. The at least one corresponding audio datum may then be processed by the electronic computing device into a literal project information request using, for example, a speech-to-text algorithm.

This embodiment may result in increased convenience and/or accessibility of the project information access system. For example, this embodiment may allow the user to submit at least the project information request even when a typing device is not within physical reach of the user and even when at least one hand of the user is engaged with at least one other task.

According to another embodiment, the method comprises the additional step of receiving at least one user feedback datum concerning at least the at least one matching datum and/or at least the at least one matching worker contact detail by the electronic computing device via the communication platform.

One example of a user feedback datum is a rating of the at least one matching datum and/or the at least one matching worker contact detail with a like/dislike system, for example with a thumbs up or thumbs down button on an interface of the communication platform. Alternatively, the interface may present a series of five stars that may be variously clicked by the user to input a rating out of five stars. Alternatively or in addition, the user may write out a message concerning, for example, a user assessed relevance of the at least one matching datum and/or the at least one matching worker contact detail.

This embodiment presents an advantage of potentially facilitating improvement of the project information access system. For example, at least one user feedback datum may be stored for or transmitted to at least one software developer to be used in tweaking the project information access system and/or in planning at least one new feature for the project information access system. Alternatively, for example, if a negative user feedback datum pertains to an only weakly relevant matching by the electronic computing device of the project information request to the at least one matching datum and/or the at least one matching worker contact datum, this may indicate a dearth of project information data available to the project information access system in a particular area. This dearth may then, for instance, be nominated by a reviewer of the feedback for remedy at a company meeting concerning potential new company research and development, R&D, initiatives.

Various user experience data may be saved along with the at least one user feedback datum, for example so that a reviewer may understand what may be at least one cause of a low rating. The various user experience data may include at least one of the project information request, the at least one matching datum, and the at least one matching worker contact detail. If, for example, the communication platform features a chatbot, the various user experience data may alternatively or in addition include at least one other chat input and/or at least one other chat output.

For example, these various user experience data may be saved to a local non-transitory computer-readable storage medium. Alternatively or in addition, the various data may be transmitted to be saved in a remote database.

Alternatively or in addition to review by a human, if, for example, at least one artificial intelligence algorithm is used by the project information access system, the at least one user feedback datum may be used for reinforcement learning to improve the at least one artificial intelligence algorithm. Specifically, for example, user feedback data in the form of ratings out of five stars may be used as a basis for a loss function used to train at least one of the at least one artificial intelligence algorithm. In other words, at least one of the at least one artificial intelligence algorithm may be trained to maximize a received rating.

According to another embodiment, the matching of the at least one project information request to the at least one matching datum depends on at least one exclusion criterion.

For example, an exclusion criterion may be used to exclude as a possible matching datum at least one project information datum that is associated with a higher security clearance than has been attributed to the user, such as with a credential verification on the communication platform. This may increase user convenience because the user may not be referred to project information data that he is unable to access.

As another example, an exclusion criterion may be used to exclude as a possible matching datum at least one project information datum that is already associated with the user. For example, the electronic computing device may avoid matching the project information request to a project information datum if a name associated with the user is also associated with the project information datum. This may reduce the risk of matching the project information request to project information data of which the user is already aware.

As another example, an exclusion criterion may be used to exclude as a possible matching datum at least one project information datum that is not available in at least one language known to the user. While some project information data may be translated by use of, for example, an artificial intelligence algorithm, the user may, for example, seek project information data on a worker whom he may call. In this example, it may be inconvenient for the user to call a worker with whom he may not speak at least one common language.

According to another embodiment, the matching step is performed using at least one recurrent neural network, an RNN. At least one of the at least one recurrent neural network may be implemented as a long short-term memory network, an LSTM. At least one of the at least one recurrent neural network may be a large language model, an LLM.

Recurrent neural networks are known to the state of the art to be effective in natural language processing algorithms, for example for parsing human-language inputs to a program. In particular, recurrent neural networks are known to the state of the art to be effective in implementing chatbots, especially those intended for short conversations, for example conversations comprising a total of six exchanged messages, or conversations conforming to a small number of predictable templates, for example four predictable templates.

According to another embodiment, the matching step is performed using at least one artificial neural network based on a transformer architecture. At least one of the at least one artificial neural network may be a large language model, an LLM.

Transformer architectures are known to the state of the art to be effective in implementing large language models, LLMs, due to a reduced training time compared to recurrent neural networks, RNNs. Consequently, this embodiment may be advantageous for, for instance, implementing a chatbot capable of more nuanced and human-like conversations than may be possible with a chatbot implemented with a recurrent neural network.

A large language model, which may also be called language model, is in particular referred to in the context of natural language processing (NLP) and artificial intelligence (Al). A large language model is a type of artificial intelligence model that is trained on large amounts of text data to understand patterns, structures, and meaning in human language. A large language model typically refers to a model that has been trained on an extremely large dataset, often consisting of billions or even trillions of words. These models are capable of generating human-like texts, translating languages, summarizing documents, answering questions, and performing other language-related tasks with high accuracy and fluency. Large language models have many potential applications in areas such as customer service, content creation, education and research.

According to an embodiment, the method comprises the additional step of generating at least one relevance indicator for at least one of the at least one matching datum and/or at least one of the at least one matching worker contact detail by the electronic computing device.

A relevance indicator may be, for example, an overall score, for example out of 100, for each of the at least one matching datum. Alternatively or in addition, a relevance indicator may be, for example, at least one subscore, for example out of 100, concerning each of at least one quality of each of the at least one matching datum. More specifically, for instance, one subscore could pertain to a time relevance of each of the at least one matching datum, wherein a more recently published matching datum may be assigned a higher time relevance than a less recently published matching datum. Another subscore may, for example, pertain to a keyword relevance estimated by a fraction of keywords in the project information request that also appear in each of the at least one matching datum. Another subscore may, for example, pertain to a user popularity as estimated by the electronic computing device based on at least one user feedback datum, about each of the at least one matching datum, according to a preceding embodiment.

If the electronic computing device provides multiple matching data and/or multiple matching worker contact details, the multiple matching data and/or multiple matching worker contact details may be provided to the user in an order determined by multiple corresponding relevance indicators. For example, the multiple matching data and/or multiple matching worker contact details may be displayed to a display device in order of descending relevance as indicated by the multiple corresponding relevance indicators. In combination with a preceding embodiment concerning at least one exclusion criterion, a minimum relevance threshold may be used by the electronic computing device to automatically exclude at least one matching datum whose assigned relevance score is too low.

According to an embodiment, the method comprises the additional step of generating at least one project information summary from the at least one matching datum by the electronic computing device.

This embodiment presents the potential advantage of increasing efficiency of information retrieval. For example, if the user is prevented by a deadline from studying at least one file matched by the electronic computing device to the project information request, a summary may still allow the user to understand essential points of the file. An interface of the communication platform may, for example, allow the user to specify a maximum length of the summary and/or a format of the summary, for example a list of bullet points or a paragraph.

If, for example, the at least one matching datum is provided by the electronic computing device to the user and is a file, the electronic computing device may simultaneously provide a summary of the file and/or at least one metadatum of the file. Similarly, for example, if several matching data are provided, the electronic computing device may simultaneously provide a summary of the several matching data treated as a whole. In particular, for example, if the at least one matching datum is an audio and/or video file lacking a transcript, the electronic computing device may automatically generate a transcript from which to generate a summary.

According to an embodiment, the method comprises the additional step of determining at least one unoccupied segment of working time in a digital calendar associated with the at least one matching worker contact detail by the electronic computing device.

For example, if a worker associated with at least one of the at least one matching worker contact detail maintains a digital calendar accessible to the project information access system, the electronic computing device may evaluate empty stretches of time in the digital calendar and within, for example, a week after a time of the submission of the project information request. The project information access system may furthermore make use of information such as a time zone associated with the worker and/or working hours associated with the worker in order to determine which of the empty stretches of time corresponds to working time.

In addition, if the user, for example, maintains a digital calendar accessible to the project information access system, the electronic computing device may simultaneously perform, for example, a similar analysis on the user digital calendar. Then, the electronic computing device may, for example, compare its analysis of the user digital calendar to its analysis of the worker digital calendar to assess for which of the empty stretches of time the user and the worker are simultaneously available.

For example, the electronic computing device may then offer, via the communication platform, to automatically send a message to the worker requesting a particular timeslot, potentially depending on at least one of the aforementioned analyses. Alternatively or in addition, the electronic computing device may offer, for example, to automatically update the user digital calendar and/or the worker digital calendar with a calendar entry concerning a possible dialogue between the user and the worker.

In particular, the present invention is a computer-implemented method. Therefore, another aspect of the invention relates to a computer program product containing computer-readable instructions for performing a method according to the preceding aspect.

A further aspect of the present invention relates to a non-transitory computer-readable storage medium comprising at least the computer program product according to the preceding aspect.

A still further aspect of the invention relates to an electronic computing device configured for performing a method according to the preceding aspect. In particular, the method is performed by the electronic computing device.

According to an embodiment, the electronic computing device is configured as a component of a server system. A server system is a single computing system designed to receive at least one request from and serve at least one resource to, at least one other single computing system known as a client system. The server system and the at least one client system may be connected by, for example, an Ethernet cable, or they may be connected wirelessly, for example via at least two telecommunication devices. A server system may run a web server software such as the Apache HTTP server, Ngingx, or lighttpd. A server system may comprise more than one electronic computing device. For example, a server may comprise at least one server rack consisting of, for example, 10 electronic computing devices.

A potential advantage of this embodiment is remote availability of the project information access system. If the project information access system is accessible through, for example, a website, rather than through, for example, an application stored on a particular user-end device such as a personal computer, a companywide installation of an application, which for a company of, say, 500 employees, may be time expensive, may be avoided. Furthermore, at least one revision to an implementation of the method may be effected more quickly, because potentially only a server may need to be updated, rather than, say, 500 personal computers.

Advantageous embodiments of the method are to be regarded as advantageous embodiments of the computer program product, the computer-readable storage medium, as well as the electronic computing device. The electronic computing device therefore comprises means for performing the method.

For use cases or use situations which may arise in a method according to the invention and which are not explicitly described herein, it may be provided that, in accordance with the method, an error message and/or a prompt for user feedback is output and/or a default setting and/or a predetermined initial state is set.

Independent of the grammatical term usage, individuals with male, female or other gender identities are included within the term.

Further features and feature combinations of the invention are obtained from the figures and their description as well as the claims. In particular, further implementations of the invention may not necessarily contain all features of one of the claims. Further implementations of the invention may comprise features or combinations of features, which are not recited in the claims.

Therefore:
- Fig. 1: shows a schematic block diagram of an embodiment of an electronic computing device according to the present invention; and
- Fig. 2: a schematic view on a display device of the electronic computing device providing an embodiment according to the invention.

In the figures, the same elements are indicated by the same reference signs.

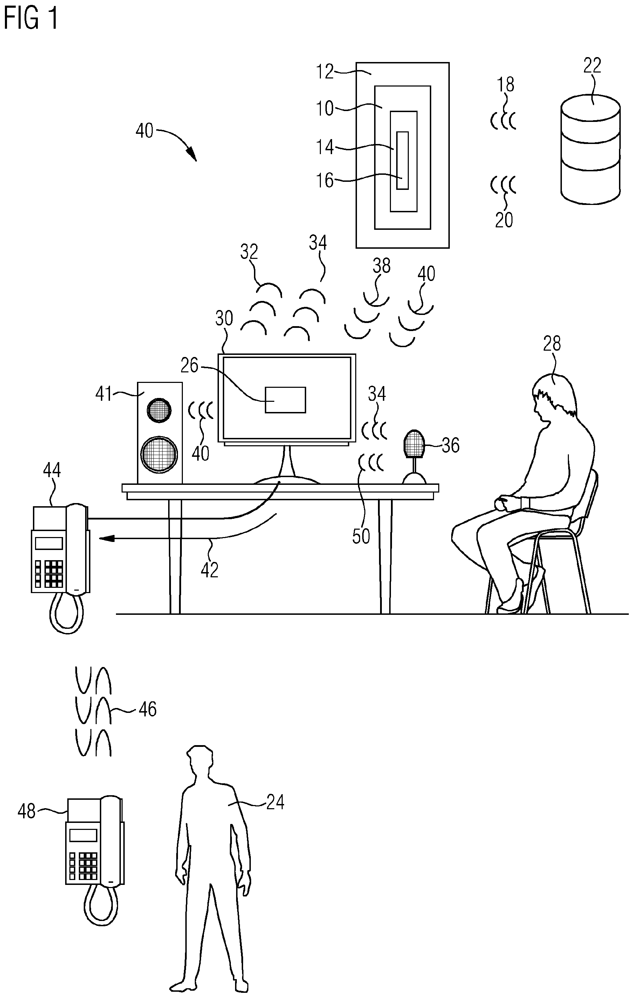

Fig. 1 shows a schematic block diagram according to an embodiment of an electronic computing device 10. In this example, the electronic computing device 10 is configured as a component of a server system 12 as according to an embodiment. The electronic computing device 10 is operating a project information access system 14. In this example, the project information access system 14 makes use of at least one recurrent neural network 16 as according to an embodiment. In this example, the project information access system 14 makes use of a single the recurrent neural network 16.

In a first step of the method, at least one project information datum 18 is provided by the electronic computing device 10. The at least one project information datum 18 is associated with at least one worker contact detail 20. In this example, the at least one project information datum 18 and the at least one worker contact detail 20 are transmitted to the electronic computing device 10 by a corporate database 22. In this example, a single project information datum 18 and a single corresponding worker contact detail 20 are provided by the electronic computing device 10. Specifically, in this example, the project information datum 18 is a set of meeting slides regarding a new computer program for debugging and the worker contact detail 20 is a telephone number of an expert 24 who created the debugging program.

In a second step of the method, a communication platform 26 for two-way communication with a user 28 of the project information access system 14 is provided by the electronic computing device 10. In this example, the communication platform 26 is a website accessible via a web browser of a personal computer 30 of the user 28. Furthermore, in this example, the personal computer 30 transmits an exclusion criterion 32 to the electronic computing device 10, wherein the exclusion criterion 32 is derived from a user profile recorded on a non-transitory computer-readable storage medium of the personal computer 30. In this example, the exclusion criterion 32 describes a set of human languages that the user 28 speaks.

In a third step of the method, at least one project information request 34 is received from the user 28 by the electronic computing device 10 via the communication platform 26. In this example, the project information request 34 is a request by the user 28 for someone who may be called regarding the debugging program. In this example and according to an embodiment, at least the project information request 34 is captured as an audio input from the user 28 by an audio input device 36 and transmitted to the electronic computing device 10. In this example, the audio input device 36 is a digital microphone connected to the personal computer 30. Furthermore, in this example, since the electronic computing device 10 is configured as a component of the server system 12, the project information request 34 is transmitted from the personal computer 30 to the electronic computing device 10.

In a fourth step, the project information request 34 is matched by the electronic computing device 10 to at least one matching datum 38 of the at least one project information datum 18. In this example, the electronic computing device 10 makes use of the recurrent neural network 16 to perform the matching. Specifically, in this example, the recurrent neural network 16 is used to process the project information request 34 into a computer-readable data product streamlined for matching. For example, the recurrent neural network 16 may output from the project information request 34 a first set of keywords and may output from each of the at least one project information datum 18 at least one second set of keywords. In this example, since one project information datum 18 is provided by the electronic computing device 10, the recurrent neural network 16 outputs one second set of keywords. Furthermore, in this example, the electronic computing device 10 identifies three keywords from the first set of keywords as identical to three keywords from the second set of keywords. Consequently, the electronic computing device 10 tentatively identifies the project information datum 18 as the matching datum 38 and, by extension, the worker contact detail 20 corresponding to the matching datum 38 as the matching worker contact detail 40.

In this example and according to an embodiment, the matching of the at least one project information request 34 to the at least one matching datum 38 depends on the exclusion criterion 32. Consequently, in this example, the electronic computing device 10 may access a set of languages spoken by the expert 24. In particular, in this example, the electronic computing device 10 may subsequently find that both the user 28 and the expert 24 speak English. As a result, in this example, the electronic computing device 10 may confirm the project information datum 18 as the matching datum 38 and, by extension, the worker contact detail 20 corresponding to the matching datum 38 as the matching worker contact detail 40.

In a fifth step, the matching datum 38 and/or the matching worker contact detail 40 is provided to the user 28 via the communication platform 26 by the electronic computing device 10, depending on the project information request 34. In this example, since the project information request 34 represents a request for someone who may be called, the electronic computing device 10 provides the matching worker contact detail 40 without the corresponding matching datum 38. Furthermore, in this example and according to an embodiment, at least the matching worker contact detail 40 is transmitted by the electronic computing device 10 to an audio output device 41. In this example, the audio output device 41 is a speaker connected to a personal computer 30.

According to an embodiment, in a sixth step, the electronic computing device 10 generates a control signal 42 for at least one telecommunication device 44 associated with the user 28 to establish at least one telecommunication connection 46 with a telecommunication device 48 associated with at least one of the at least one matching worker contact detail 40, depending on a received user input 50. In this example, the user input 50 is received by the personal computer 30 from the audio input device 36 and transmitted to the electronic computing device 10. In particular, the user input 50 is, in this example, a request by the user 28 to dial the telephone number provided by the electronic computing device 10 as the matching worker contact detail 40. In this example, the electronic computing device 10 generates one control signal 42 for one telecommunication device 44, here a telephone, associated with the user 28 to establish one telecommunication connection 46, here a telephone call, with one telecommunication device 48, here also a telephone, associated with the at least one matching worker contact detail 40.

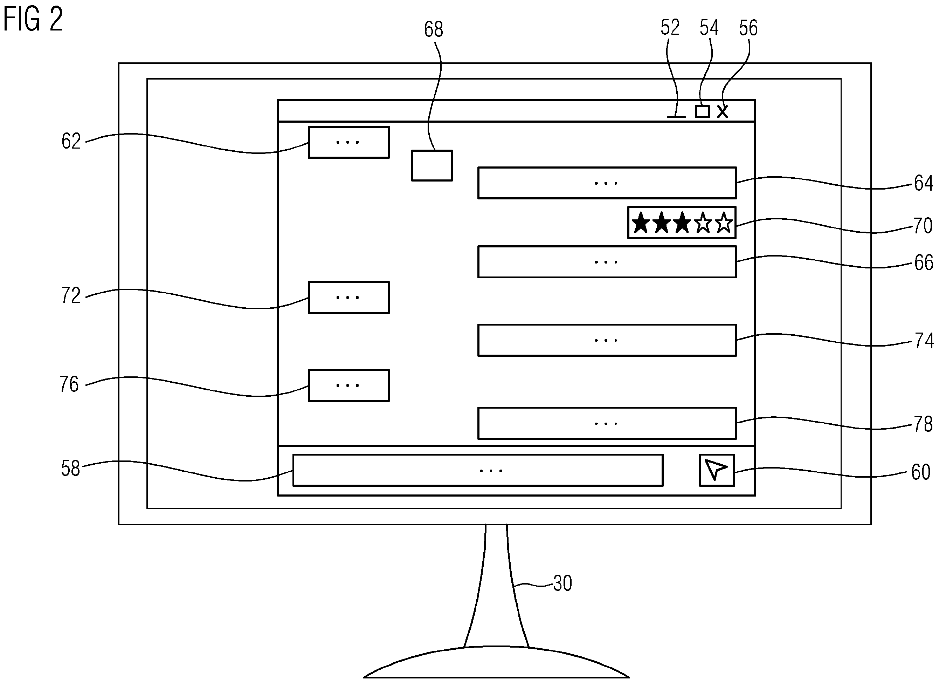

In Fig. 2, a display device of the personal computer 30 is shown running a computer program, stored on a local non-transitory computer-readable storage medium, that interfaces with the communication platform 26. In this example, the communication platform 26 may feature user interface elements known to the state of the art such as a window minimizing button 52, a window maximizing button 54, a window closing button 56, a text input bar 58, and a text submission button 60. In particular, Fig. 2 shows a chatbot-style conversation between the user 28 and the electronic computing device supported 10 by a large language model based on a transformer architecture, as described in an embodiment.

In a first user message 62, the user 28 includes the project information request 34. In this example, the first user message 62 includes a request for information concerning a group of corporate surveys. In a first chatbot message 64, the electronic computing device 10 provides a matching datum 38, and in a second chatbot message 66, the electronic computing device 10 provides a matching worker contact detail 40. In this example, the matching datum 38 is a company memo describing the group of corporate surveys in four sentences and the matching worker contact detail 40 is a human resources staff member in charge of the group of corporate surveys.

According to an embodiment, the electronic computing device 10 generates at least one relevance indicator 68 for at least one of the at least one matching datum 38 and/or at least one of the at least one matching worker contact detail 40. In this example, the relevance indicator 68 is a score out of 10 assigned by the electronic computing device 10 to the matching datum 38. Specifically, in this example, a score of eight is assigned on account of some, but not all, keywords being shared between the project information request 34 and contents of the matching datum 38.

According to another embodiment, at least one user feedback datum 70 concerning at least the at least one matching datum 38 and/or at least the at least one matching worker contact detail 40 is received by the electronic computing device via the communication platform. In this example, the at least one user feedback datum 70 is a three-star rating out of five stars assigned by the user 28 to the matching datum 38 via a user interface element of the communication platform 26.

According to a further embodiment, the electronic computing device 10 may generate at least one project information summary from the at least one matching datum 38. In a second user message 72, the user 28 requests a summary of the matching datum 38. In a third chatbot message 74, the electronic computing device 10 provides the requested summary. In this example, as the matching datum 38 is a company memo comprising four sentences, the third chatbot message 74 comprises one sentence describing an announced purpose of the group of corporate surveys.

According to a still further embodiment, the electronic computing device 10 may determine at least one unoccupied segment of working time in a digital calendar associated with the at least one matching worker contact detail the by the electronic computing device 10. In this example, in a third user method 76, the user 28 requests a time at which he may call the human resources staff member. In this example, in a fourth chatbot message 78, the electronic computing device 10 describes a result of, for instance, a joint analysis performed on a user digital calendar as well as a worker digital calendar associated with the human resources staff member. Specifically, in this example, the fourth chatbot message 78 notes that in one hour from the generation of the fourth chatbot method 78, both the user 28 and the human resources staff member will have one hour of unscheduled time.

## Claims

1. A method for providing a project information access system (14) by an electronic computing device (10), comprising the steps of:
- providing at least one project information datum (18) by the electronic computing device (10), where each of the at least one project information datum (18) is associated with at least one worker contact detail (20);
- providing a communication platform (26) by the electronic computing device (10) for two-way communication with a user (28) of the project information access system (14);
- receiving a project information request (34) from the user (28) by the electronic computing device (10) via the communication platform (26);
- matching the project information request (34) by the electronic computing device (10) to at least one matching datum (38) of the at least one project information datum (18); and
- providing the at least one matching datum (38) and/or at least one matching worker contact detail (40) corresponding to the at least one matching datum (38) to the user (28) via the communication platform (26) by the electronic computing device (10), depending on the project information request (34).

2. The method according to claim 1, comprising the additional step of
generating a control signal (42) for a telecommunication device (44) associated with the user (28) to establish at least one telecommunication connection (46) with a telecommunication device (48) associated with at least one of the at least one matching worker contact detail (40), depending on a received user input (50).

3. The method according to any one of the preceding claims, wherein
at least the at least one matching datum (38) and/or the at least one matching worker contact detail (40) is transmitted by the electronic computing device (10) to an audio output device (41).

4. The method according to any one of the preceding claims, wherein
at least the project information request (34) is captured as an audio input from the user (28) by an audio input device (36) and transmitted to the electronic computing device (10).

5. The method according to any one of the preceding claims, comprising the additional step of
receiving at least one user feedback datum (70) concerning at least the at least one matching datum (38) and/or at least the at least one matching worker contact detail (40) by the electronic computing device (10) via the communication platform (26).

6. The method according to any one of the preceding claims, wherein
the matching of the at least one project information request (34) to the at least one matching datum (38) depends on at least one exclusion criterion (32).

7. The method according to any one of the preceding claims, wherein
the matching step is performed using at least one recurrent neural network (16).

8. The method according to any one of the preceding claims, wherein
the matching step is performed using at least one artificial neural network based on a transformer architecture.

9. The method according to any one of the preceding claims, comprising the additional step of
generating at least one relevance indicator (68) for at least one of the at least one matching datum (38) and/or at least one of the at least one matching worker contact detail (40) by the electronic computing device (10).

10. The method according to any one of the preceding claims, comprising the additional step of
generating at least one project information summary from the at least one matching datum (38) by the electronic computing device (10).

11. The method according to any one of the preceding claims, comprising the additional step of
determining at least one unoccupied segment of working time in a digital calendar associated with the at least one matching worker contact detail (40) by the electronic computing device (10).

12. A computer program product containing computer-readable instructions for performing a method according to any one of claims 1 to 11.

13. A non-transitory computer-readable storage medium comprising the computer program product according to claim 12.

14. An electronic computing device (10) configured for performing a method according to any one of claims 1 to 11.

15. The electronic computing device (10) according to claim 14, wherein
the electronic computing device (10) is configured as a component of a server system (12).
